# EUROPEAN PATENT APPLICATION

(11) **EP 4 653 698 A1**
(43) Date of publication of application: **26.11.2025**
(21) Application number: 23944900.2
(22) Date of filing: 07.11.2023
(51) Int. Cl.: F03G 3/00

(54) **DISTRIBUTED GRAVITATIONAL SUPERIMPOSED ENERGY HARVESTING POWER GENERATION APPARATUS**

(30) Priority: 07.07.2023 CN 202310827195
(71) Applicant: Zheng, Jianhua, Ningbo, Zhejiang 315000 (CN)
(72) Inventor: Zheng, Jianhua, Ningbo, Zhejiang 315000 (CN)
(74) Representative: Calysta NV
(86) International application number: PCT/CN2023/130303
(87) International publication number: WO 2025/010894

(57) **Abstract**

Disclosed in the present invention is a distributed gravitational superimposed energy harvesting power generation apparatus, comprising a gravitational pressing mechanism, a multi-level lever conversion mechanism and a central rotating shaft (3); a rotating bearing (8) is provided at the center of the multi-level lever conversion mechanism; the gravitational pressing mechanism at least comprises a first gravity body (7) and a second gravity body (7-2); the multi-level lever conversion mechanism comprises load-bearing pressure plates (17), a first load-bearing support, a second load-bearing support and a third load-bearing support which are arranged from top to bottom; and the first gravity body (7) and the second gravity body (7-2) are arranged on the load-bearing pressure plates (17). Rolling pressure energy of the gravity bodies is harvested via distributed energy superposed harvesting, levers convert the mechanical energy to drive hydraulic pumps to store energy, and, when an energy harvesting pressure value is reached, the energy is released to drive generators to generate power under stable pressure.

## Description

### TECHNICAL FIELD

The invention relates to the technical field of power generation equipment, and in particular to a distributed gravity superposition energy collection and power generation device.

### BACKGROUND

The power generation equipment of existing power stations mainly converts energy including fossil fuels, wind energy, hydropower, nuclear energy, etc. into electrical energy, and generates electricity through energy conversion. The use of fossil fuels for power generation faces problems such as high energy consumption and environmental pollution, while new energy sources such as wind energy and nuclear energy are restricted by environmental and safety factors. The use of mechanical energy for power generation can utilize excess mechanical energy to a certain extent, which can more conveniently meet small-scale electricity needs and does not pose environmental protection problems. The prior art has disclosed some devices for generating electricity using mechanical energy.

For example, the invention with application number 201521063789 is named a vibration energy collection mechanism. The main structure thereof comprises a vibration energy collection mechanism, a driving ratchet mechanism, and an output gear mechanism, wherein the vibration energy collection mechanism is in the form of a balance spring and a mass ball. When vibration occurs, the mass ball shakes, the spring expands and contracts to collect energy, and the energy is transferred by driving the ratchet mechanism. The advantage of the invention is that the mass ball can sensitively capture the mechanical energy generated by the position change caused by the speed change in each direction, and absorb disordered and chaotic vibration energy. However, since there is only one set of balance springs and mass balls in the structure of the device, the device has the disadvantages of a small total amount of collected energy and a low energy collection rate.

### SUMMARY

In view of this, the purpose of the invention is to provide a distributed gravity superposition energy collection and power generation device, which utilizes gravity to press into the superposition of multi-level levers for conversion, thereby improving the energy conversion utilization rate.

The technical solution of the invention is to provide a distributed gravity superposition energy collection and power generation device, comprising a gravity pressing mechanism, a multi-level lever conversion mechanism, and a central rotating shaft;
the central rotating shaft is fixed with a steering wheel, and the steering wheel is connected with a push-pull rod; the central rotating shaft is cooperated with a rotating bearing, and the rotating bearing is located at a center of the multi-level lever conversion mechanism;
the gravity pressing mechanism comprises at least a first gravity body and a second gravity body; the first gravity body and the second gravity body are located on an upper part of the multi-level lever conversion mechanism, and are vertically connected to the central rotating shaft through a first rotating shaft push rod and a second rotating shaft push rod respectively via bearings;
the multi-level lever conversion mechanism comprises load-bearing pressing plates, a first load-bearing bracket, a second load-bearing bracket, and a third load-bearing bracket arranged from top to bottom; the first gravity body and the second gravity body are located on the load-bearing pressing plate; the load-bearing pressing plate is fixed with spring pins, and the first load-bearing bracket is provided with pin holes; each of the spring pin is sleeved with a spring and inserted into the pin hole;
the second load-bearing bracket is provided with pressure-bearing rods, and each of the pressure-bearing rod is sleeved with a lever reaction plate; an upper part of the lever reaction plate is flush with the load-bearing pressing plate, and a bottom of the lever reaction plate is provided with pull rope holes for pull ropes to pass through;
the third load-bearing bracket is provided with output bearing seats, and each of the output bearing seat is provided with an output rotating shaft; a middle of the output rotating shaft is fixed with a pull rope connecting rod, and the pull rope passes through a tight hoop on the pull rope connecting rod; the pull rope connecting rod is hooked with a tension spring at a bottom of the third load-bearing bracket, and the other end of the tension spring is connected to a third load-bearing bracket crossbar; an outer port of the output rotating shaft is connected to a coupling, and power is transmitted outwardly through the coupling.

Alternatively, the output rotating shafts are connected to a hydraulic pump system through the couplings, and the hydraulic pump system stores energy, stabilizes pressure, and maintains pressure for the received power.

Alternatively, the output rotating shaft is connected to the output bearing seat through a one-way bearing; the load-bearing pressing plate applies downward pressure under the action of the first gravity body and the second gravity body, so that the lever reaction plate drives the pull rope at the lower end to move, and drives the output rotating shaft to rotate through the pull rope connecting rod; the output rotating shaft rotates under the action of the tension spring, thereby achieving unidirectional rotating power output.

Alternatively, the hydraulic pump system comprises a hydraulic pump input shaft, an oil pipe joint, a hydraulic pump oil pipe, a multi-way pipe, a one-way valve, a safety valve, and an accumulator; the hydraulic pump input shaft is connected to the output rotating shaft, and an oil outlet of the hydraulic pump system is connected to the oil pipe joint; the oil pipe joint is inserted into the hydraulic pump oil pipe, and the hydraulic pump oil pipe is inserted into the multi-way pipe; the intensive outlet of the multi-way pipe is connected to the one-way valve, and the one-way valve is connected to an oil inlet of the safety valve; the safety valve oil outlet A is tightly connected to the accumulator, and the safety valve oil outlet B is connected to a generator through a hydraulic regulating module.

Alternatively, the hydraulic regulating module comprises a relief valve, a regulating valve, and a motor; the safety valve oil outlet B is connected to a safety valve connecting oil pipe through a safety valve oil pipe joint, and the other end of the safety valve connecting oil pipe is connected to an oil inlet of the relief valve; an oil outlet of the relief valve is connected to an oil inlet of the regulating valve, and an oil outlet of the regulating valve is connected to an regulating valve oil pipe joint; the regulating valve oil pipe joint is inserted into a regulating valve oil pipe and tightened, and the other end of the regulating valve oil pipe is connected to an oil inlet of the motor; the rotating shaft of the motor is fastened to the coupling, and the other end of the coupling is fastened to the generator.

Alternatively, an oil outlet of the motor is connected to an oil return pipe, and the oil return pipe is inserted into an oil tank; an oil inlet of the hydraulic pump system is provided with an oil inlet pipe, and the other end of the oil inlet pipe is placed inside the oil tank to achieve oil return.

Alternatively, the two adjacent output rotating shafts are respectively meshed with gears on the hydraulic pump input shaft through gears; when the first gravity body or the second gravity body drives a certain output rotating shaft to rotate, the next adjacent output rotating shaft has not yet started to rotate; after the previous output rotating shaft has completed its rotation, the next output rotating shaft starts to rotate, so that the next two adjacent output rotating shafts drive the same hydraulic pump input shaft to move.

The structure of the invention has the following advantages compared with the prior art: the invention adopts the principle of distributed hierarchical superposition energy collection, integrates three major systems, utilizes gravity bodies, and generates active pressure through gravity pressing methods such as pushing, pulling, and rolling. Mechanical levers are used to collect gravity pressure and convert it into mechanical energy for power generation through energy storage, pressure maintenance, and pressure regulation. The hydraulic pump system can be used for expansion, thereby improving the scale of power generation and energy utilization.

### BRIEF DESCRIPTION OF THE DRAWINGS

FIG. 1 is a front view of the distributed gravity superposition energy collection and power generation device according to invention.
FIG. 2 is a schematic diagram of the structure of the multi-level lever conversion mechanism according to invention.
FIG. 3 is a top view of the structure of the multi-level lever conversion mechanism according to invention.
FIG. 4 is a schematic diagram of the structure of the hydraulic pump system according to invention.

As shown in the figures: 1 refers to the push-pull rod; 2 refers to the steering wheel; 3 refers to the central rotating shaft; 4 refers to the six-way connecting piece; 5 refers to the first rotating shaft push rod; 5-2 refers to the second rotating shaft push rod; 6 refers to the first gravity internal bearing; 6-2 refers to the second gravity internal bearing; 7 refers to the first gravity body; 7-2 refers to the second gravity body; 8 refers to the rotating bearing; 9 refers to the first layer of load-bearing bracket inner bar; 10 refers to the first pin hole; 11 refers to the first load-bearing bracket crossbar; 12 refers to the first layer of load-bearing bracket outer bar; 13 refers to the second pin hole; 14 refers to the spring pin; 15 refers to the spring; 16 refers to the first layer of rotating shaft bearing seat; 17 refers to the load-bearing pressing plate; 18 refers to the first layer of load-bearing bracket vertical bar; 19 refers to the heavy bracket assembly vertical bar; 20 refers to the second layer outer bar of load-bearing bracket; 21 refers to the pressure-loading rod; 22 refers to the lever reaction plate; 23 refers to the third layer of load-bearing crossbar; 24 refers to the output rotating shaft; 25 refers to the pull rod connecting rod; 26 refers to the pull rope; 27 refers to the tension spring; 28 refers to the first coupling; 29 refers to the hydraulic pump system; 30 refers to the output bearing seat; 31 refers to the oil pipe joint; 32 refers to the hydraulic pump oil pipe; 33 refers to the multi-way pipe; 34 refers to the one-way valve; 35 refers to the safety valve; 36 refers to the accumulator; 37 refers to the safety valve oil pipe joint; 38 refers to the pressure gauge; 39 refers to the safety valve connecting oil pipe; 40 refers to the relief valve; 41 refers to the regulating valve; 42 refers to the regulating valve oil pipe connecting joint; 43 refers to the regulating valve oil pipe; 44 refers to the motor; 45 refers to the second coupling; 46 refers to the generator; 47 refers to the oil inlet pipe; 48 refers to the oil tank; 49 refers to the oil return pipe.

### DETAILED DESCRIPTION OF THE EMBODIMENTS

The preferred embodiments of the invention will be described in detail hereinafter with reference to the accompanying drawings, but the invention is not limited to these embodiments. The invention covers any substitution, modification, equivalent method and scheme made on the spirit and scope of the invention.

In order to make the public have a thorough understanding of the invention, specific details will be described in detail in the following preferred embodiments of the invention, but those skilled in the art can fully understand the invention without the description of these details.

The invention will be described in more detail in the following paragraphs by way of example with reference to the accompanying drawings. It should be noted that the accompanying drawings are all simplified and not in exact proportion, and are only used for the purpose of conveniently and clearly assisting in explaining the embodiments of the invention.

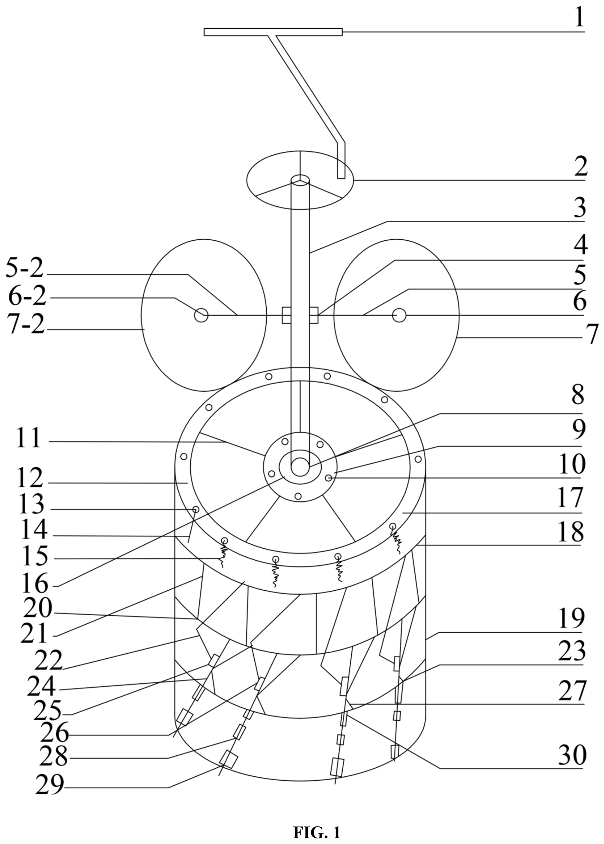

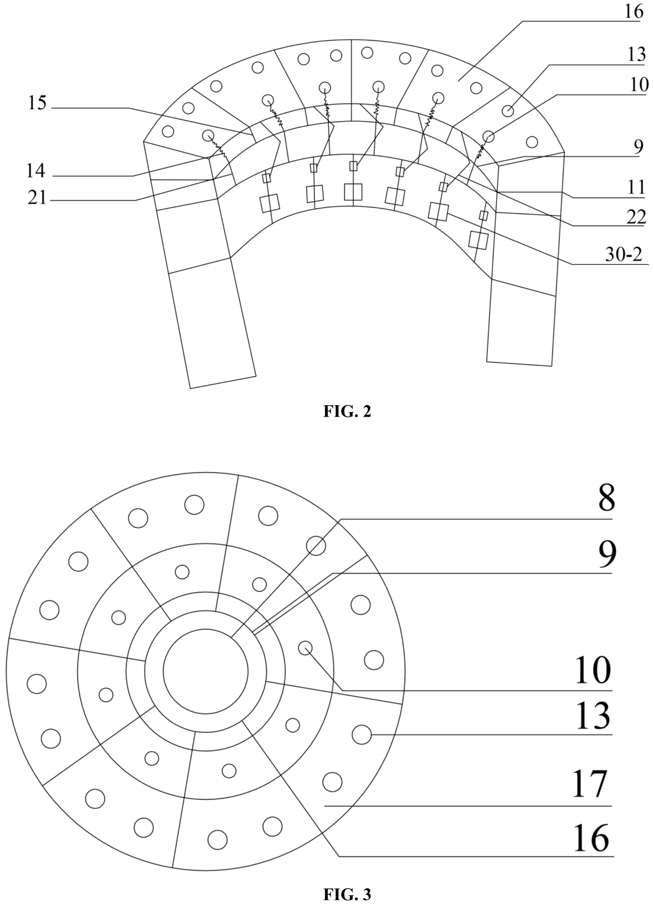

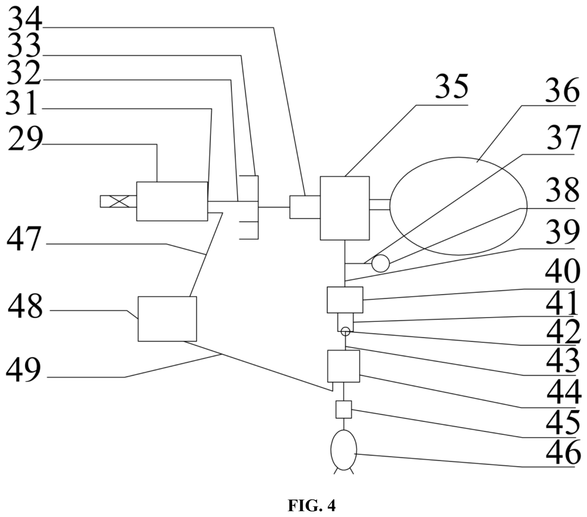

As shown in FIGS. 1-4, the invention provides a distributed gravity superposition energy collection and power generation device, comprising a gravity pressing mechanism, a multi-level lever conversion mechanism, and a central rotating shaft 3;
the central rotating shaft 3 is fixed with a steering wheel 2, and the steering wheel 2 is connected with a push-pull rod 1; the central rotating shaft 3 is cooperated with a rotating bearing 8, and the rotating bearing 8 is located at a center of the multi-level lever conversion mechanism;
the gravity pressing mechanism comprises at least a first gravity body 7 and a second gravity body 7-2; the first gravity body 7 and the second gravity body 7-2 are located on an upper part of the multi-level lever conversion mechanism, and are vertically connected to the central rotating shaft 3 through a first rotating shaft push rod 5 and a second rotating shaft push rod 5-2 respectively via bearings;
the multi-level lever conversion mechanism comprises load-bearing pressing plates 17, a first load-bearing bracket, a second load-bearing bracket, and a third load-bearing bracket arranged from top to bottom; the first gravity body 7 and the second gravity body 7-2 are located on the load-bearing pressing plate 17; the load-bearing pressing plate 17 is fixed with spring pins 14, and the first load-bearing bracket is provided with pin holes 10; each of the spring pin 14 is sleeved with a spring 15 and inserted into the pin hole 10;
the second load-bearing bracket is provided with pressure-bearing rods 21, and each of the pressure-bearing rod 21 is sleeved with a lever reaction plate 22; an upper part of the lever reaction plate 22 is flush with the load-bearing pressing plate 17, and a bottom of the lever reaction plate 22 is provided with pull rope holes for pull ropes 26 to pass through;
the third load-bearing bracket is provided with output bearing seats 30, and each of the output bearing seat 30 is provided with an output rotating shaft 24; a middle of the output rotating shaft 24 is fixed with a pull rope connecting rod 25, and the pull rope 26 passes through a tight hoop on the pull rope connecting rod 25; the pull rope connecting rod 25 is hooked with a tension spring 27 at a bottom of the third load-bearing bracket, and the other end of the tension spring 27 is connected to a third load-bearing bracket crossbar 23; an outer port of the output rotating shaft 24 is connected to a coupling 28, and power is transmitted outwardly through the coupling 28.

The output rotating shafts 24 are connected to a hydraulic pump system through the couplings 28, and the hydraulic pump system stores energy, stabilizes pressure, and maintains pressure for the received power.

The output rotating shaft 24 is connected to the output bearing seat 30 through a one-way bearing; the load-bearing pressing plate 17 applies downward pressure under the action of the first gravity body 7 and the second gravity body 7-2, so that the lever reaction plate 22 drives the pull rope 26 at the lower end to move, and drives the output rotating shaft 24 to rotate through the pull rope connecting rod 25; the output rotating shaft 24 rotates under the action of the tension spring 27, thereby achieving unidirectional rotating power output.

The hydraulic pump system comprises a hydraulic pump input shaft 29, an oil pipe joint 31, a hydraulic pump oil pipe 32, a multi-way pipe 33, a one-way valve 34, a safety valve 35, and an accumulator 36; the hydraulic pump input shaft 29 is connected to the output rotating shaft 24, and an oil outlet of the hydraulic pump system is connected to the oil pipe joint 31; the oil pipe joint 31 is inserted into the hydraulic pump oil pipe 32, and the hydraulic pump oil pipe 32 is inserted into the multi-way pipe 33; the intensive outlet of the multi-way pipe 33 is connected to the one-way valve 34, and the one-way valve 34 is connected to an oil inlet of the safety valve 35; the safety valve oil outlet A is tightly connected to the accumulator 36, and the safety valve oil outlet B is connected to a generator 46 through a hydraulic regulating module.

The hydraulic regulating module comprises a relief valve 40, a regulating valve 41, and a motor 44; the safety valve oil outlet B is connected to a safety valve connecting oil pipe 39 through a safety valve oil pipe joint 37, and the other end of the safety valve connecting oil pipe 39 is connected to an oil inlet of the relief valve 40; an oil outlet of the relief valve 40 is connected to an oil inlet of the regulating valve 41, and an oil outlet of the regulating valve 41 is connected to an regulating valve oil pipe joint 42; the regulating valve oil pipe joint 42 is inserted into a regulating valve oil pipe 43 and tightened, and the other end of the regulating valve oil pipe 43 is connected to an oil inlet of the motor 44; the rotating shaft of the motor 44 is fastened to the coupling 45, and the other end of the coupling is fastened to the generator 46.

An oil outlet of the motor 44 is connected to an oil return pipe 49, and the oil return pipe 49 is inserted into an oil tank 48; an oil inlet of the hydraulic pump system is provided with an oil inlet pipe 47, and the other end of the oil inlet pipe 47 is placed inside the oil tank 48 to achieve oil return.

The two adjacent output rotating shafts 24 are respectively meshed with gears on the hydraulic pump input shaft 29 through gears; when the first gravity body 7 or the second gravity body 7-2 drives a certain output rotating shaft 24 to rotate, the next adjacent output rotating shaft 24 has not yet started to rotate; after the previous output rotating shaft 24 has completed its rotation, the next output rotating shaft 24 starts to rotate, so that the next two adjacent output rotating shafts 24 drive the same hydraulic pump input shaft 29 to move. The invention can be arranged in a ring shape or a cylindrical shape, and the scale can be expanded, thereby achieving an increase in the scale of power generation.

The specific working structure of the invention is as follows: a push-pull rod 1 is provided, a sleeve at the front end of the push-pull rod is sleeved on the handle of the steering wheel 2, and the center of the steering wheel is welded to the central rotating shaft 3. The central rotating shaft is connected to the six-way connecting piece 4 by screw threads, and the six-way horizontal four-way connecting piece is connected to the rotating shaft push rods 5 and 5-2 by screw threads. The rotating shaft push rods are connected through the gravity body inner bearings 6 and 6-2, and the gravity body inner bearings are placed in the center of the gravity bodies 7 and 7-2. The central rotating shaft is tightly matched with the rotating bearing 8, which is placed in the first layer of the rotating shaft bearing seat 16 and welded with the load-bearing bracket inner bar 9. The load-bearing bracket is divided into three layers, namely, upper, middle and lower. The first layer of load-bearing bracket outer bar is welded with the load-bearing bracket vertical bar, and the load-bearing bracket inner bar 9 is welded with the load-bearing bracket crossbar 11. The inner bar 9 and the outer bar 12 of the first layer of the load-bearing bracket are all provided with pin holes 10 and 13. The load-bearing pressing plate 17 is welded with the top of the spring pin 14, and the spring pin is inserted into the inner hole of the spring 15 and placed in the inner and outer bar pin holes. The second layer outer bar of load-bearing bracket is provided with a pressure-loading rod 21, and the heavy bracket assembly vertical bar 19 is welded. The lever reaction plate 22 is sleeved on the pressure-loading rod 21; the upper part of the lever reaction plate is flat with the load-bearing pressing plate 17, and the pull rope 26 passes through the pull rope hole at the bottom of the lever reaction plate. The third layer of the inner and outer bars of the bracket are provided with an output bearing seat 30, and the bearing seat is sleeved with an output rotating shaft 24. A pull rope connecting rod 25 is welded in the middle of the output rotating shaft, and the pull rope 26 passes through the tight hoop on the connecting rod. The pull rope connecting rod is hooked with the tension spring 27 at the bottom of the third layer, and the other end of the tension spring is located on the third layer of load-bearing crossbar 23. The outer port of the output rotating shaft is connected to the coupling 28, and the other end of the coupling is connected to the hydraulic pump input shaft 29.

The oil outlet of the hydraulic pump system is connected to the oil pipe joint 31 by thread, the oil pipe joint is inserted into the hydraulic pump oil pipe 32 and tightened, the hydraulic pump oil pipe is inserted into the multi-way pipe 33, the intensive outlet of the multi-way pipe is connected to the one-way valve 34, the one-way valve thread is connected to the oil inlet of the safety valve 35 by thread and tightened, the safety valve oil outlet A thread is connected to the accumulator 36 by thread and tightened, the safety valve oil outlet B is threaded to the safety valve oil pipe joint 37 and tightened, the oil pipe joint is inserted into the safety valve connection oil pipe 39 and tightened, and the pressure gauge 38 is inserted into the pressure gauge port of the safety valve oil outlet and tightened with threads. The other end of the safety valve connecting oil pipe joint is connected to the oil inlet of the relief valve 40 by thread and fastened. The oil outlet of the relief valve is fastened to the oil inlet of the regulating valve 41 by thread. The oil outlet of the regulating valve is connected to the regulating valve oil pipe joint 42 by thread and fastened. The regulating valve oil pipe joint is placed in the regulating valve oil pipe 43 and tightened. The screw port of the regulating valve oil pipe is configured to be fastened with the nut of the motor 44 oil inlet. The motor shaft is fastened with the coupling 45, and the other end of the coupling is fastened with the power generator 46. The motor oil outlet is connected to the oil return pipe 49, and the oil return pipe is inserted into the oil tank 48. The oil inlet of the hydraulic pump 29 is provided with an oil inlet pipe 47, and the other end of the oil inlet pipe is placed in the oil tank.

The invention creatively proposes the principle of distributed hierarchical superposition energy collection, integrating three major systems, using gravity bodies, and the dynamic pressure generated by gravity pressure-in methods such as pushing, pulling, rolling, and stepping, using mechanical levers to collect gravity pressure and convert it into mechanical energy power generation through energy storage, pressure maintenance and pressure regulation. The main innovations are: 1. distributed multi-level superposition energy collection; 2. using gravity bodies to push, pull, and roll, and stepping as power sources; 3. converting gravity bodies into power through distributed mechanical levers; 4. using energy storage to collect intermittent power and stabilizing and maintaining pressure to store energy and generate electricity through voltage regulation.

Although the embodiments are described and illustrated separately above, some common technologies are involved. It is the opinion of ordinary technicians in this field that the embodiments can be replaced and integrated. If the content is not clearly recorded in one of the embodiments, reference can be made to another recorded embodiment.

The above only describes the preferred embodiments of the invention, but it should not be understood as limiting the claims. The invention is not limited to the above embodiments, and its specific structure is allowed to be changed. In short, all modifications made within the protection scope of the independent claims of the invention are within the protection scope of the invention.

## Claims

1. A distributed gravity superposition energy collection and power generation device, comprising a gravity pressing mechanism, a multi-level lever conversion mechanism, and a central rotating shaft (3), wherein:
the central rotating shaft (3) is fixed with a steering wheel (2), and the steering wheel (2) is connected with a push-pull rod (1); the central rotating shaft (3) is cooperated with a rotating bearing (8), and the rotating bearing (8) is located at a center of the multi-level lever conversion mechanism;
the gravity pressing mechanism comprises at least a first gravity body (7) and a second gravity body (7-2); the first gravity body (7) and the second gravity body (7-2) are located on an upper part of the multi-level lever conversion mechanism, and are vertically connected to the central rotating shaft (3) through a first rotating shaft push rod (5) and a second rotating shaft push rod (5-2) respectively via bearings;
the multi-level lever conversion mechanism comprises load-bearing pressing plates (17), a first load-bearing bracket, a second load-bearing bracket, and a third load-bearing bracket arranged from top to bottom; the first gravity body (7) and the second gravity body (7-2) are located on the load-bearing pressing plate (17); the load-bearing pressing plate (17) is fixed with spring pins (14), and the first load-bearing bracket is provided with pin holes (10); each of the spring pin (14) is sleeved with a spring (15) and inserted into the pin hole (10);
the second load-bearing bracket is provided with pressure-bearing rods (21), and each of the pressure-bearing rod (21) is sleeved with a lever reaction plate (22); an upper part of the lever reaction plate (22) is flush with the load-bearing pressing plate (17), and a bottom of the lever reaction plate (22) is provided with pull rope holes for pull ropes (26) to pass through;
the third load-bearing bracket is provided with output bearing seats (30), and each of the output bearing seat (30) is provided with an output rotating shaft (24); a middle of the output rotating shaft (24) is fixed with a pull rope connecting rod (25), and the pull rope (26) passes through a tight hoop on the pull rope connecting rod (25); the pull rope connecting rod (25) is hooked with a tension spring (27) at a bottom of the third load-bearing bracket, and the other end of the tension spring (27) is connected to a third load-bearing bracket crossbar (23); an outer port of the output rotating shaft (24) is connected to a coupling (28), and power is transmitted outwardly through the coupling (28).

2. The distributed gravity superposition energy collection and power generation device of Claim 1, wherein the output rotating shafts (24) are connected to a hydraulic pump system through the couplings (28), and the hydraulic pump system stores energy, stabilizes pressure, and maintains pressure for the received power.

3. The distributed gravity superposition energy collection and power generation device of Claim 1, wherein the output rotating shaft (24) is connected to the output bearing seat (30) through a one-way bearing; the load-bearing pressing plate (17) applies downward pressure under the action of the first gravity body (7) and the second gravity body (7-2), so that the lever reaction plate (22) drives the pull rope (26) at the lower end to move, and drives the output rotating shaft (24) to rotate through the pull rope connecting rod (25); the output rotating shaft (24) rotates under the action of the tension spring (27), thereby achieving unidirectional rotating power output.

4. The distributed gravity superposition energy collection and power generation device of Claim 3, wherein the hydraulic pump system (29) comprises a hydraulic pump input shaft, an oil pipe joint (31), a hydraulic pump oil pipe (32), a multi-way pipe (33), a one-way valve (34), a safety valve (35), and an accumulator (36); the hydraulic pump input shaft (29) is connected to the output rotating shaft (24), and an oil outlet of the hydraulic pump system is connected to the oil pipe joint (31); the oil pipe joint (31) is inserted into the hydraulic pump oil pipe (32), and the hydraulic pump oil pipe (32) is inserted into the multi-way pipe (33); the intensive outlet of the multi-way pipe (33) is connected to the one-way valve (34), and the one-way valve (34) is connected to an oil inlet of the safety valve (35); the safety valve oil outlet A is tightly connected to the accumulator (36), and the safety valve oil outlet B is connected to a generator (46) through a hydraulic regulating module.

5. The distributed gravity superposition energy collection and power generation device of Claim 4, wherein the hydraulic regulating module comprises a relief valve (40), a regulating valve (41), and a motor (44); the safety valve oil outlet B is connected to a safety valve connecting oil pipe (39) through a safety valve oil pipe joint (37), and the other end of the safety valve connecting oil pipe (39) is connected to an oil inlet of the relief valve (40); an oil outlet of the relief valve (40) is connected to an oil inlet of the regulating valve (41), and an oil outlet of the regulating valve (41) is connected to an regulating valve oil pipe joint (42); the regulating valve oil pipe joint (42) is inserted into a regulating valve oil pipe (43) and tightened, and the other end of the regulating valve oil pipe (43) is connected to an oil inlet of the motor (44); the rotating shaft of the motor (44) is fastened to the coupling (45), and the other end of the coupling is fastened to the generator (46).

6. The distributed gravity superposition energy collection and power generation device of Claim 4, wherein an oil outlet of the motor (44) is connected to an oil return pipe (49), and the oil return pipe (49) is inserted into an oil tank (48); an oil inlet of the hydraulic pump system is provided with an oil inlet pipe (47), and the other end of the oil inlet pipe (47) is placed inside the oil tank (48) to achieve oil return.

7. The distributed gravity superposition energy collection and power generation device of Claim 1, wherein the two adjacent output rotating shafts (24) are respectively meshed with gears on the hydraulic pump input shaft (29) through gears; when the first gravity body (7) or the second gravity body (7-2) drives a certain output rotating shaft (24) to rotate, the next adjacent output rotating shaft (24) has not yet started to rotate; after the previous output rotating shaft (24) has completed its rotation, the next output rotating shaft (24) starts to rotate, so that the next two adjacent output rotating shafts (24) drive the same hydraulic pump input shaft (29) to move.

8. The distributed gravity superposition energy collection and power generation device of Claim 1, wherein the load-bearing pressing plates (17) are arranged in a plurality along the circumferential direction, and each load-bearing pressing plate (17) corresponds to one lever reaction plate (22) and one output rotating shaft (24).
